# FASCICULE DE BREVET EUROPEEN

(11) **EP 0 409 758 B1**
(45) Date de publication et mention de la délivrance du brevet: **26.05.1993**
(21) Numéro de dépôt: 90470043.2
(22) Date de dépôt: 02.07.1990
(51) Int. Cl.: F24B 1/20, A21B 1/33

(54) **Four à feu de bois fonctionnant en continu en particulier pour pizzas**
Ofen mit Holzfeuerung für ununterbrochenen Betrieb, insbesondere für Pizzen
Continuously working wood burning oven particularly for pizzas

(30) Priorité: 17.07.1989 FR 8909749
(43) Date de publication de la demande: 23.01.1991
(73) Titulaire: Georges, Francois, F-88700 Jeanmenil (FR); Tisserant, Jean-Luc, F-88700 Jeanmenil (FR)
(72) Inventeur: Georges, Francois, F-88700 Jeanmenil (FR); Tisserant, Jean-Luc, F-88700 Jeanmenil (FR)
(74) Mandataire: Poupon, Michel

(56) Documents cités:
- FR-A- 641 222
- FR-A- 2 612 742
- US-A- 4 474 165

## Description

La présente invention concerne un four à feu de bois à chauffage direct destiné à la cuisson d'aliments, et plus particulièrement à ceux qui cuisent en présence de la flamme, les plus connus étant les pizzas.

La cuisson de ces aliments est traditionnellement exécutée dans des fours à bois à sole fixe, ce qui en limite le rendement et la régularité.

Un four de ce type est décrit dans le document US-A- 4 474 165, il comporte une voûte en forme de dôme réfléchissant la chaleur sur une sole placée au dessus d'un foyer, à l'arrière du four.

Ce four présente des inconvénients : mauvaise exploitation de la chaleur, surtout en partie avant, mécanisation en vue d'une augmentation de débit très difficile en raison de la position du foyer.

Pour assurer de grands débits, ce type de cuisson est exécuté dans des fours tunnels chauffés au gaz ou à l'électricité, ce qui supprime beaucoup de charme et de saveur à ces mets.

Le four selon l'invention permet d'assurer un débit important et une cuisson régulière en utilisant comme le veut la tradition un feu de bois pour unique source de chaleur.

Plus précisément, il s'agit d'un four à feu de bois à chauffage direct destiné à la cuisson d'aliments, et plus particulièrement à ceux qui cuisent en présence de la flamme du type comportant une voûte sensiblement en forme de dôme posé sur la sole et dont la cavité est tournée vers la sole et le foyer, ladite voûte étant découpée en une partie circulaire centrale pourvue d'un épaulement périphérique et en une partie périphérique divisée en portions de cercle, les portions se raccordant entre elles par une feuillure ou tout autre assemblage permettant libre dilatation et étanchéité, le nombre de ces portions étant fonction de la dimension du four, caractérisé en ce que le foyer est disposé au centre de la sole et en ce que :
- la partie centrale circulaire est plus basse que la partie périphérique,
- la courbure de la partie centrale de la voûte prolonge la courbure des parties périphériques qu'elle supporte de façon à ce que la voûte présente une forme annulaire concave tournée vers une zone annulaire plance de la sole entourant le foyer.

Il comporte en effet comme première caractéristique une voûte sensiblement hémi-torique dort la courbure permet de réfléchir et répartir régulièrement le rayonnement du foyer central sur la sole et notamment sur la zone où il est prévu de déposer préférentiellement les produits à cuire.

En seconde caractéristique, il comporte une sole tournante dort la vitesse de rotation varie de 0 à 1 tour par minute, animée par un moteur électrique à variateur réducteur ; la sole possède en son centre un foyer en creux alimenté en air de combution par l'intermédiaire de volets réglables. Un cendrier amovible est fixé de manière étanche sous ce foyer.

En troisième caractéristique et en variante, on prévoit un ensemble de plateaux tournants destinés à recevoir les produits à cuire, animés d'un mouvement de rotation coordonné au mouvement de la sole afin d'assurer aux aliments une cuisson régulière.

On comprendra mieux l'invention à l'aide de la description faite ci-après d'un mode de mise en oeuvre donné à titre d'exemple non limitatif en référence aux dessins annexés dans lesquels :
- la **figure 1** représente un four conforme à l'invention en coupe verticale.
- la **figure 2** montre l'assemblage des éléments de la voûte.
- la **figure 3** est une vue de détail des plateaux tournants.

En référence aux figures, ce four de cuisson comporte les éléments suivants :

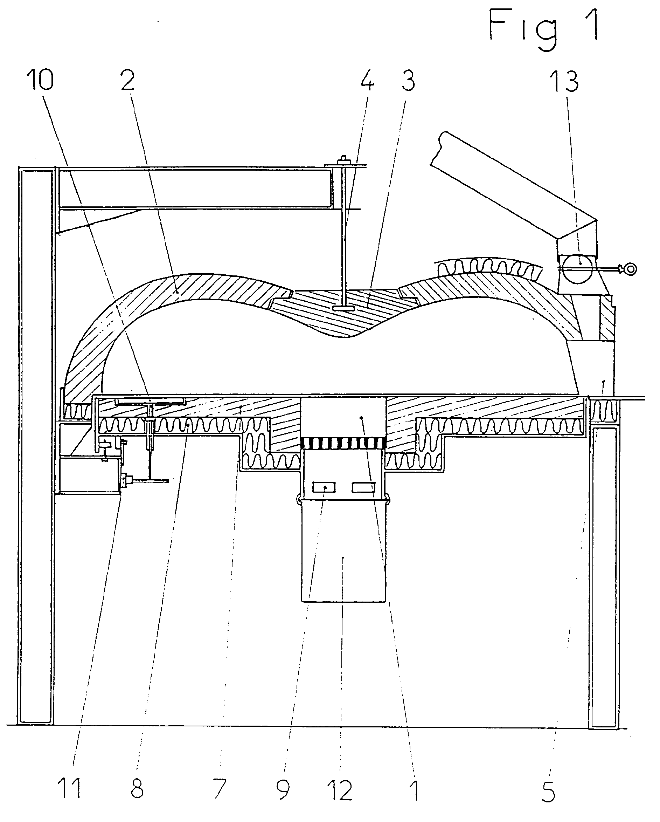

Selon la figure 1 , la voûte est caractérisée par sa forme (2) et (3) réalisée en matériaux réfractaires, et recouverte d'un isolant souple réfractaire. Elle est étudiée et conçue de telle façon qu'elle soit apte à réfléchir le rayonnement du foyer (1) de manière uniforme sur la partie de la sole (7) qui doit chauffer et accumuler régulièrement. Elle est caractérisée par une forme annulaire ou hémi-torique offrant en son centre une partie concave (3) au dessus du foyer.

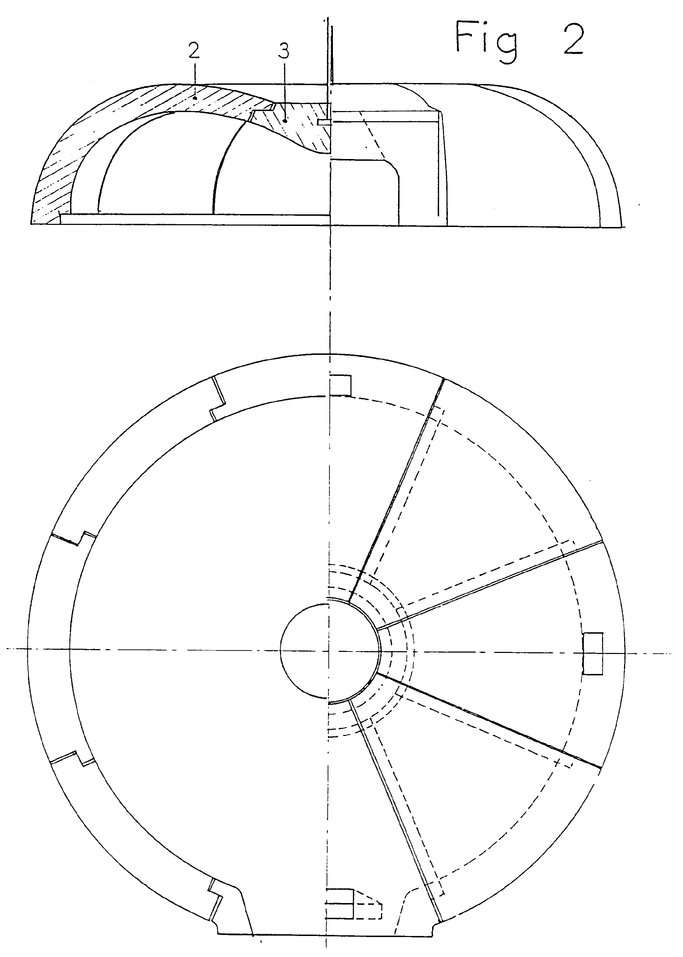

Il y a l'obligation de donner à la voûte une forme annulaire concave au dessus du foyer. La voûte devra donc être découpée pour satisfaire aux problèmes des déformations dues aux dilatations et températures différentes supportées par la voûte. Ces découpes sont caractérisées par une partie circulaire (3) au centre pourvue d'un épaulement périphérique supportant comme le montre la figure 2 l'ensemble du reste de la voûte (2), elle même divisée en portions de cercle. Les portions se raccordent entre elles par une feuillure ou tout autre assemblage permettant libre dilatation et étanchéité. Le nombre de ces portions sera fonction de la dimension du four. De plus, il est nécessaire de maintenir les différentes pièces (2) et (3) de la voûte dans le sens vertical et horizontal. Ce maintien est obtenu pour la pièce centrale (3) dans le sens vertical par une tige en acier inoxydable (4) réglable en hauteur prenant appuis sur l'ossature métallique du four, et pour les pièces périphériques (2) dans le sens horizontal par une ceinture circulaire métallique réglable en hauteur, et dans le sens vertical par l'intermédiaire d'un isolant réfractaire rigide sur cette même ceinture métallique.

Les extractions de fumée sont réalisées au niveau de leur section totale par la règle de proportionnalité utilisée dans les calculs de foyer à feu ouvert en fonction de la somme des sections d'ouverture : porte d'enfournement, fuite entre sole et voûte, air de combustion et également en fonction de la hauteur du conduit. Une extraction de fumée est obligatoirement réalisée au droit de la porte d'enfournement (5), le reste de l'extraction se fait par des trous pratiqués dans la voûte de section et de nombre suffisants en fonction de la taille du four pour obtenir une répartition homogène des gaz chauds dans la partie supérieure de la voûte. Ces trous sont réalisés à la même hauteur que le linteau de la porte d'enfournement, soit au maximum au 2/3 de la plus grande hauteur de la voûte.

Avantageusement, on peut prévoir l'ajout d'autres portes d'enfournement et/ou de défournement sur des modèles de taille important afin d'augmenter le nombre de postes de travail, et/ou pour y disposer des mécanismes de chargement/déchargement automatiques.

De même on peut faire varier le nombre et la taille des extractions de fumée, chacune d'entre elles comportant un clapet de réglage pouvant limiter sans obturer le passage des gaz brulés (13).

Comme on peut le voir à la figure 1 le four est équipé d'une sole horizontale avec un foyer central (1) et une partie horizontale en matériau réfractaire (7) reposant sur une plate-forme métallique par l'intermédiaire d'un isolant réfractaire rigide et performant (8).

Selon un mode préférentiel de mise en oeuvre, la sole peut être mise en rotation à une vitesse fonction de la rapidité à cuire l'aliment et de l'intensité du feu. La sole reposant sur un ensemble de galets est entrainée en rotation à l'aide d'un moteur réducteur à vitesse variable procurant à la sole une rotation pouvant varier de 0 à 1 tour/minute dont le dispositif de réglage du variateur est à la disposition de l'opérateur.

Pour une sole horizontale à foyer central, la partie base du foyer comporte une grille inférieure, des volets d'admission réglables d'air de combustion (9) et un cendrier amovible (12) afin d'en effectuer la vidange.

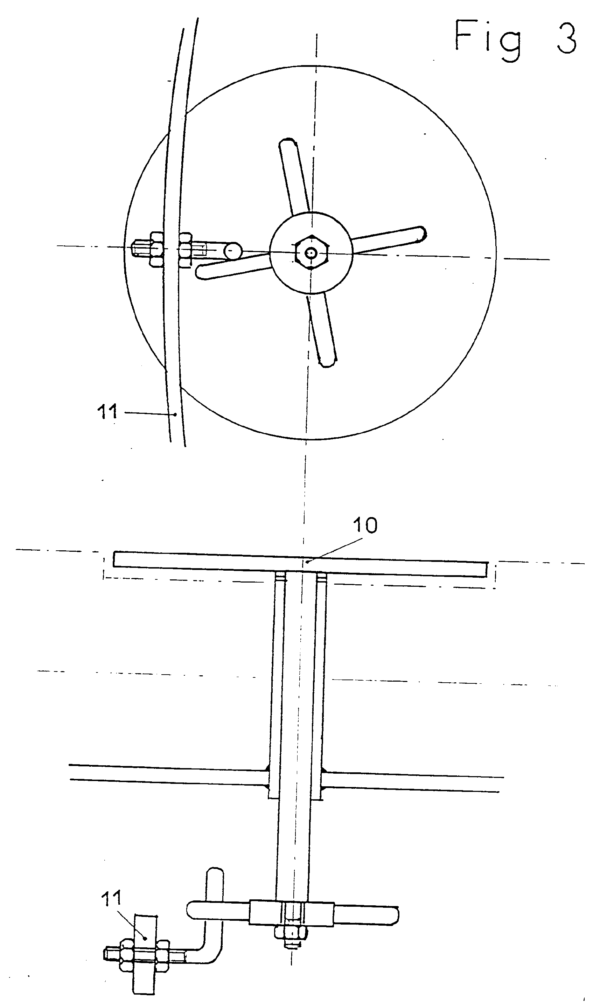

Enfin, selon la variante de la figure 3, la sole est équipée d'un système à plateaux métalliques animés d'un mouvement de rotation coordonné et tributaire de la rotation de la sole, cette variante étant caractérisée par des plateaux (10) solidaires en leur centre d'un axe qui traverse toute l'épaisseur de la sole où ils sont maintenus en hauteur, et libre en rotation. Ils sont sous la sole terminés par une pièce en forme d'étoile dont les branches lors de la rotation de la sole viennent en contact avec des butées qui impriment à l'ensemble plateau un mouvement de rotation. Ces butées peuvent être disposées à différents endroits sur la couronne (11) solidaire du bâti.

Un tel dispositif rotatif peut être adapté à tous les fours à pizzas traditionnels éventuellement avec four latéral.

## Revendications

1. Four à feu de bois à chauffage direct destiné à la cuisson d'aliments, et plus particulièrement à ceux qui cuisent en présence de la flamme du type comportant une voûte (2 et 3) sensiblement en forme de dôme posé sur la sole et dont la concavité est tournée vers la sole et le foyer, ladite voûte étant découpée en une partie circulaire (3) centrale pourvue d'un épaulement périphérique et en une partie périphérique (2) divisée en portions de cercle, les portions se raccordant entre elles par une feuillure ou tout autre assemblage permettant libre dilatation et étanchéité, le nombre de ces portions étant fonction de la dimension du four, caractérisé en ce que le foyer est disposé au centre de la sole et en ce que :
- la partie centrale circulaire (3) est plus basse que la partie périphérique
- la courbure de la partie centrale de la voûte prolonge la courbure des parties périphériques qu'elle supporte de façon à ce que la voûte présente une forme annulaire concave tournée vers une zone annulaire plane de la sole entourant le foyer.

2. Four selon la revendication 1 caractérisé en ce que les différentes pièces (2 et 3) de la voûte sont maintenues dans le sens vertical et horizontal, ce maintien étant obtenu pour la pièce centrale (3) dans le sens vertical par une tige en acier inox-ydable (4) réglable en hauteur prenant appuis sur l'ossature métallique du four, et pour les pièces périphériques (2) dans le sens horizontal par une ceinture circulaire métallique réglable en hauteur, et dans le sens vertical par l'intermédiaire d'un isolant réfractaire rigide sur cette même ceinture métallique.

3. Four selon l'une quelconque des revendications 1 à 2 caractérisé en ce que les extractions de fumée sont réalisées au niveau de la porte d'enfournement, fuite entre sole et voûte, air de combustion, une extraction de fumée étant obligatoirement réalisée au droit de la porte d'enfournement (5), le reste de l'extraction se faisant par des trous pratiqués dans la voûte, ces trous étant réalisés à la même hauteur que le linteau de la porte d'enfournement, soit au maximum au 2/3 de la plus grande hauteur de la voûte.

4. Four selon l'une quelconque des revendications 1 à 3 caractérisé en ce qu'il comporte une pluralité de portes d'enfournement et/ou de défournement sur des modèles de taille importante afin d'augmenter le nombre de postes de travail et/ou pour y disposer des mécanismes de chargement/déchargement automatiques.

5. Four selon l'une quelconque des revendications 1 à 4 caractérisé en ce qu'il comporte une sole horizontale avec un foyer central (1) et une partie horizontale en matériau réfractaire (7) reposant sur une plate-forme métallique par l'intermédiaire d'un isolant réfractaire rigide (8).

6. Four selon la revendication 5 caractérisé en ce que la sole peut être mise en rotation à une vitesse fonction de la rapidité à cuire l'aliment et de l'intensité du feu, ladite sole reposant sur un ensemble de galets et étant entraînée en rotation à l'aide d'un moteur réducteur à vitesse variable procurant à celle-ci une rotation pouvant varier de 0 à 1 tour/minute dont le dispositif de réglage du variateur est à la disposition de l'opérateur.

7. Four selon la revendication 6 caractérisé en ce que pour une sole horizontale à foyer central, la partie base du foyer comporte une grille inférieure, des volets d'admission réglables d'air de combustion (9) et un cendrier amovible (12) afin d'en effectuer la vidange.

8. Four selon la revendication 6 caractérisé en ce que la sole est équipée d'un système à plateaux métalliques animés d'un mouvement de rotation coordonné et tributaire de la rotation de la sole, lesdits plateaux (10) étant solidaires en leur centre d'un axe qui traverse toute l'épaisseur de la sole où ils sont maintenus en hauteur, et libres en rotation, ceux-ci se terminant sous la sole par une pièce en forme d'étoile dont les branches lors de la rotation de la sole viennent en contact avec des butées qui impriment à l'ensemble plateau un mouvement de rotation, ces butées pouvant être disposées à différents endroits sur la couronne (11) solidaire du bâti.

## Patentansprüche

1. Holzfeuer-Backofen mit direkter Heizung zum Backen von Nahrungsmitteln und insbesondere solchen, die in Gegenwart der Flamme backen. welcher über der Herdplatte ein im wesentlichen domförmiges Gewölbe (2 und 3) aufweist, dessen Aushöhlung gegen den Feuerraum und den Herd gerichtet ist, wobei das Gewölbe in einen zentralen, kreisförmigen Teil (3) mit einer umlaufenden Schulter und in einen in Kreisteile unterteilten peripheren Teil (2) unterteilt ist, wobei die Teile durch eine Fuge oder jegliche andere Verbindung, die eine freie Dehnung und Abdichtung gestattet, miteinander verbunden sind und die Anzahl dieser Teile eine Funktion der Ofenabmessung ist, **dadurch gekennzeichnet**, daß der Feuerraum im Zentrum der Herdplatte angeordnet ist und daß der zentrale, kreisförmige Teil (3) tiefer als der periphere Teil liegt und die Biegung des zentralen Teils des Gewölbes die Biegung der peripheren Teile, die er trägt, in einer solchen Weise verlängert, daß das Gewölbe eine konkave Ringform bildet, die gegen eine Ringzone gerichtet ist, welche zu einem ringförmigen, ebenen Bereich des den Feuerraum umgebenden Herdes weist.

2. Backofen nach Anspruch 1, **dadurch gekennzeichnet,** daß die verschiedenen Teile (2 und 3) des Gewölbes in vertikaler und horizontaler Richtung gehalten sind, wobei diese Halterung für das zentrale Stück (3) in vertikaler Richtung durch eine nicht rostende Stahlstange (4) erhalten wird, die in der Höhe einstellbar ist und sich an dem metallischen Gerüst des Ofens für die peripheren Stücke (2) in horizontaler Richtung durch einen metallischen in der Höhe einstellbaren kreisförmigen Bund und in vertikaler Richtung durch die Zwischenanordnung einer festen, feuerfesten Isolierung auf dem gleichen metallischen Bund abstützt.

3. Backofen nach einem der Ansprüche 1 bis 2, **dadurch gekennzeichnet**, daß der Rauchabzug auf der Höhe der Beschickungstür angeordnet ist, daß ein Rauchabzug zwangsläufig rechts von der Beschickungstür (5) vorgesehen ist und der restliche Abzug über in das Gewölbe eingebrachte Löcher erfolgt, wobei diese Löcher in dergleichen Höhe wie die Oberkante der Beschickungstür, maximal auf 2/3 der größten Höhe des Gewölbes angebracht sind.

4. Backofen nach einem der Ansprüche 1 bis 3, **dadurch gekennzeichnet**, daß er bei großer Ausführung mehrere Beschickungs- und/oder Entnahmetüren aufweist, um wesentlich die Anzahl der Arbeitsstände zu erhöhen und/oder um dort Mechanismen zur automatischen Beschikkungs/Entnahme anzuordnen.

5. Backofen nach einem der Ansprüche 1 bis 4, **dadurch gekennzeichnet**, daß er eine horizontale Herdplatte mit einem zentralen Feuerraum (1) und einen horizontalen Teil aus feuerfestem Material (7) aufweist, der auf einer metallischen Plattform unter Zwischenanordnung eines festen, feuerfesten Isoliermittels (8) ruht.

6. Backofen nach Anspruch 5, **dadurch gekennzeichnet**, daß die Herdplatte mit einer von der Nahrungsmittel-Backgeschwindigkeit und der Intensität der Feuers abhängige Geschwindigkeit in Drehung versetzt werden kann, wobei die genannte Herdplatte sich auf einer Walzenanordnung abstützt und mit Hilfe eines Untersetzermotors mit variabler Geschwindigkeit in Drehung versetzt wird, die zwischen 0 und 1 Umdrehung pro Minute variieren kann und wobei die Steuereinrichtung für die Verstellung durch die Bedienungsperson zur Verfügung steht.

7. Backofen nach Anspruch 6, **dadurch gekennzeichnet**, daß für eine horizontale Herdplatte mit zentralem Feuerraum der untere Teil des Feuerraumes einen unteren Rost, Klappen (9) für die regelbare Verbrennungsluftzufuhr und einen zum Entleeren herausnehmbaren Aschenkasten (12) aufweist.

8. Backofen nach Anspruch 6, **dadurch gekennzeichnet**, daß die Herdplatte mit einem System metallischer Platten ausgerüstet ist, denen eine Drehbewegung mitgeteilt wird, die mit der Drehung der Herdplatte koordiniert und dieser unterworfen ist, wobei die genannten Platten (10) in ihrem Zentrum mit einer Achse befestigt sind, die die Dicke der Herdplatte durchdringt, wo sie in der Höhe und frei drehbar gehalten sind, und die unter der Herdplatte in einem sternförmigen Teil endet, dessen Zacken bei der Drehung der Herdplatte in Kontakt mit Anschlägen gelangen, die der Plattenanordnung eine Drehbewegung erteilen, wobei die Anschläge an verschiedenen Stellen der mit dem Rahmen befestigten Krone (11) angeordnet werden können.

## Claims

1. Wood-fired oven with direct heating intended for the cooking of foodstuffs, and more especially those foodstuffs which cook in the presence of a flame, or the type comprising a canopy (2 and 3) substantially in the shape of a dome resting on the bed-plate, the concavity of said dome being orientated towards the bed-plate and the furnace, aid canopy being divided into a central circular portion (3), which is provided with a peripheral shoulder, and a peripheral portion (2), which is divided into segments of a circle, such segments fitting together by means of a groove or any other assembly permitting free expansion and sealing, the number of these segments being determined by the dimension of the oven, characterized in that the furnace is disposed at the centre of the bed-plate and in that:
- the central circular portion (3) is lower than the peripheral portion
- the curvature of the central portion of the canopy lengthens the curvature of the peripheral portions which it supports, so that the canopy has an annular concave shape orientated towards an annular planar zone of the bed-plate surrounding the furnace.

2. Oven according to claim 1, characterized in that the various components (2 and 3) of the canopy are retained in the vertical and horizontal directions, such retention being achieved for the central component (3) in the vertical direction by a stainless steel rod (4), the height or which is adjustable, supported on the metallic framework of the oven, and for the peripheral components (2) in the horizontal direction by a circular metallic belt, the height of which is adjustable, and in the vertical direction by the intermediary of a rigid fireproof insulator on this same metallic belt.

3. Oven according to any of claims 1 to 2, characterised in that the extraction of the smoke is accomplished on a level with the cooking oven compartment door, an extraction of smoke being essentially accomplished on the right of the cooking oven compartment door (5), the rest of the extraction taking place via holes provided in the canopy, these holes being provided at the same height as the lintel of the cooking oven compartment door, i.e. at a maximum height of two-thirds of the greatest height of the canopy.

4. Oven according to any of claims 1 to 3, characterised in that comprises a plurality of cooking oven compartment doors and/or food extraction doors on models of great size, in order to increase the number of work stations and/or in order to accommodate there automatic loading/unloading mechanisms.

5. Oven according to any of claims 1 to 4, characterised in that it comprises a horizontal bed-plate with a central furnace (1) and a horizontal portion formed from fireproof material (7) resting on a metallic plateform via the intermediary of a rigid fireproof insulator (8).

6. Oven according to claim 5, characterised in that the bed-plate can be set in rotation at a speed dependent upon the rapidity at which the foodstuff cooks and the intensity of the fire, said bed-plate resting on an assembly of rollers and being rotatably driven by means of a variable speed reducer motor, providing the bed-plate with a rotation which can vary from 0 to 1 rpm, the adjustment device of the variator being at the disposal of the operator.

7. Oven according to claim 6, characterised in that, for a horizontal bed-plate with a central furnace, the base portion of the furnace comprises a lower grill, adjustable inlet shutters for the combustion air (9) and a detachable ashpan (12), in order to effect the emptying thereof.

8. Oven according to claim 6, characterised in that the bed-plate is provided with a system of metallic trays, which can be rotated in a co-ordinated manner associated with the rotation of the bed-plate, said trays (10) being integral at their centre with a spindle which traverses the entire thickness of the bed-plate at which height they are vertically retained and are free in rotation, said trays being terminated beneath the bed-plate by a star-shaped component, the branches of which, during rotation of the bed-plate, come into contact with abutments which impart a rotational movement to the tray assembly, these abutments being able to be disposed at various locations on the crown (11) which is integral with the structure.
